# EUROPEAN PATENT APPLICATION

(11) **EP 4 851 775 A1**
(43) Date of publication of application: **09.12.2026**
(21) Application number: 24923527.6
(22) Date of filing: 13.12.2024
(51) Int. Cl.: G06F 3/14, H04N 13/289

(54) **VIEW DISPLAY METHOD, DEVICE, AND STORAGE MEDIUM**

(30) Priority: 07.02.2024 CN 202410174569
(71) Applicant: ZTE Corporation, Shenzhen, Guangdong 518057 (CN)
(72) Inventor: ZHANG, Qiang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/139234
(87) International publication number: WO 2025/167325

(57) **Abstract**

Provided are a view display method, a device, and a storage medium. The view display method comprises: in response to detecting a starting instruction for converting a view of a target object from an initial dimension to a target dimension for display, creating a virtual runtime environment and a proxy display window for the target object, wherein the virtual runtime environment is a virtual runtime environment which is isolated from a real runtime environment of the target object and is used for running the target object, and the proxy display window is used for replacing a display window of the target object in the real runtime environment of the target object to display the target object; running the target object in the virtual runtime environment, and obtaining a view of the initial dimension of the target object; converting the view of the initial dimension into a view of the target dimension; and displaying the view of the target dimension in the proxy display window.

## Description

The present disclosure claims a priority to Chinese Patent Application No. 202410174569.3, filed on February 07, 2024, the entire content of which is incorporated herein by reference.

### TECHNICAL FIELD

The present disclosure relates to the field of image display technologies, and in particular, to a view image display method and device, and a storage medium.

### BACKGROUND

With the development of three dimensional (3D) technology, more and more display devices support a glasses-free 3D display effect, and some display objects on a display device may be presented as a 3D image. Taking an example of an application (APP) commonly used by a user, in some technologies, the APP needs to modify the integration of a 3D display function according to whether a device supports 3D display, so as to implement an effect of displaying a 3D image.

### SUMMARY

In an aspect, the embodiments of the present disclosure provide a view image display method. The view image display method includes: in response to detecting a starting instruction for converting a view image of a target object from an initial dimension to a target dimension for display, creating a virtual runtime environment and a proxy display window for the target object; where the virtual runtime environment is a virtual runtime environment for running the target object, isolated from a real runtime environment of the target object; the proxy display window is used to display the target object in the real runtime environment of the target object in place of a display window of the target object; running the target object in the virtual runtime environment, and acquiring a view image of the target object in the initial dimension; converting the view image in the initial dimension into a view image in the target dimension; and displaying the view image in the target dimension in the proxy display window.

In another aspect, the embodiments of the present disclosure provide a view image display method, applied to a display apparatus. The display apparatus includes: a runtime environment management module, a window management module, and a dimension conversion module. The view image display method includes: in response to detecting a starting instruction for converting a view image of the target object from an initial dimension to a target dimension for display, creating a virtual runtime environment for the target object through the runtime environment management module, and creating a proxy display window for the target object through the window management module; where the virtual runtime environment is a virtual runtime environment for running the target object, isolated from a real runtime environment of the target object; the proxy display window is used to display the target object in the real runtime environment of the target object in place of a display window of the target object; running the target object in the virtual runtime environment through the runtime environment management module, and acquiring a view image of the target object in the initial dimension; converting the view image in the initial dimension into a view image in the target dimension through the dimension conversion module; and displaying the view image in the target dimension in the proxy display window through the window management module.

In yet another aspect, the embodiments of the present disclosure provide a view image display apparatus. The display apparatus includes: a processing module and an acquiring module;
the processing module, is configured to: in response to detecting a starting instruction for converting a view image of a target object from an initial dimension to a target dimension for display, create a virtual runtime environment and a proxy display window for the target object; where the virtual runtime environment is a virtual runtime environment for running the target object, isolated from a real runtime environment of the target object; and the proxy display window is used to display the target object in the real runtime environment of the target object in place of a display window of the target object; the processing module, is further configured to run the target object in the virtual runtime environment; the acquiring module, is configured to acquire a view image of the target object in the initial dimension; the processing module, is further configured to convert the view image in the initial dimension into a view image in the target dimension; and the processing module, is further configured to display the view image in the target dimension in the proxy display window.

In yet another aspect, the embodiments of the present disclosure provide an electronic device. The electronic device includes: a memory and a processor. The memory is coupled with the processor, the memory is configured to store a computer program, and the processor, upon executing the computer program, implements the view image display method according to any one of the above aspects.

In yet another aspect, the embodiments of the present disclosure provide a computer readable storage medium, the computer readable storage medium has stored computer program instructions thereon, and the computer program instructions, upon being executed by a processor, implement the view image display method according to any one of the above aspects.

In yet another aspect, the embodiments of the present disclosure provide a computer program product, the computer program product includes computer program instructions, and the computer program instructions, upon being executed by a processor, implement the view image display method according to any one of the above aspects.

### BRIEF DESCRIPTION OF THE DRAWINGS

In order to illustrate technical solutions in the present disclosure more clearly, the drawings to be used in some embodiments of the present disclosure will be introduced briefly. Obviously, the drawings to be described below are merely drawings of some embodiments of the present disclosure, and those ordinary skilled in the art may also obtain other drawings according to these drawings.
FIG. 1 is an architecture diagram of a system of an electronic device according to some embodiments.
FIG. 2 is a schematic flow chart of a view image display method according to some embodiments.
FIG. 3 is a schematic diagram of an instance of an application display interface according to some embodiments.
FIG. 4 is a schematic flow chart of yet another view image display method according to some embodiments.
FIG. 5 is a schematic diagram of an instance of a process of conversion to 3D display by an application according to some embodiments.
FIG. 6 is a schematic diagram of an instance of proxy application control according to some embodiments.
FIG. 7 is a structural schematic diagram of a view image display apparatus according to some embodiments.
FIG. 8 is a structural schematic diagram of a view image display device according to some embodiments.

### DETAILED DESCRIPTION

The technical solutions in the present disclosure will be described clearly and completely below in conjunction with the drawings in the present disclosure. Obviously, the described embodiments are merely some but not all of the embodiments of the present disclosure. All other embodiments obtained based on the embodiments of the present disclosure by the ordinary skilled in the art without paying any creative effort, shall be included in the protection scope of the present disclosure.

It should be noted that in the present disclosure, the expressions such as "exemplary/exemplarily" or "for example" are used to present an example, illustration, or explanation. Any embodiment or design solution described as "exemplary/exemplarily" or "for example", etc., in the present disclosure should not be construed as preferred or advantageous over other embodiments or design solutions. Rather, the usage of the expressions, such as "exemplary/exemplarily" or "for example", is intended to present relevant concepts in a detailed manner.

Hereinafter, terms such as "first" and "second", etc., are used for descriptive purposes only, but cannot be understood to indicate or imply the relative importance or implicitly indicate the number of the indicated technical features. Thus, features defined with "first" or "second", etc., may explicitly or implicitly include one or more of the features.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and "multiple/plurality of" means two or more.

Before introducing the view image display method provided by the embodiments of the present disclosure in detail, an implementation environment and application scenario of the embodiments of the present disclosure will be introduced first.

First, the application scenario of the embodiments of the present disclosure is introduced.

Currently, view images displayed by a 3D device (i.e., a display device supporting 3D image display) are all view images displayed in a display window of an application itself within the 3D device. That is, 3D view images displayed by a 3D device are all 3D view images displayed in the display window of the application itself within the 3D device, and a 3D display effect of an application on the 3D device mostly depends on the application itself modifying and adapting to achieve it.

For example, if a video player APP needs to convert a playing video into a 3D effect, the APP needs to be modified to add logic for reading and determining system properties. If the device supports 3D display, the APP needs to modify and adapt a playback display process, adding integration of 2D-to-3D functionality before image presentation. It would be a huge workload if a large number of existing third-party applications all need to be modified, and device manufacturers cannot force application developers to adapt to the 3D display feature.

That is, in some technologies, on a device supporting 3D display, taking an example of a commonly used APP of a user, the APP needs to complete modification of integration of a 3D display function according to whether the device supports 3D display, so as to implement an effect of displaying a 3D image. For example, on different devices, an APP needs to read system property configuration of whether the current device supports 3D display; if the system property identifies that 3D display is not supported, the APP keeps the original logic unchanged. If the system property identifies that 3D display is supported, the APP needs to implement corresponding 3D display logic modification to display an application image in 3D. Thus, existing methods for displaying an application in 3D effect are all implemented by the APP itself integrating corresponding function modules and making adapted modifications to the 3D device.

However, among a plurality of applications installed in a 3D device, there are part of applications that do not support display of a 3D view image; and to be compatible with 3D display of part of applications on the 3D device, it is usually necessary to rely on the support of application developers to modify and adapt the playback display process of the applications, and integrate a 2D-to-3D function before the image is presented, so that the modified and adapted applications may directly display 3D view images through their own display windows. In this way, when there is a large number of applications that need to be modified and adapted, it may cause a huge adaptation workload, and there are many restrictions among different applications. Therefore, there is an urgent need for a general and effective method that may convert general applications from 2D effect to 3D effect for display.

In order to solve the above problems, the embodiments of the present disclosure provide a view image display method, applied to a scenario in which a terminal with a glasses-free 3D display screen displays a 3D image, for solving the problem that display content (for example, an APP, an operating system, a video, a game, etc.) on the terminal needs additional development and adaptation on a 3D display device to present a 3D display effect. The present disclosure implements a general 2D-to-3D proxy service method, and when the display content on the terminal (including an APP, a desktop icon, video content on an APP, game content, etc.) needs to be presented as a 3D image, the conversion of the display image from 2D to 3D may be completed by using the 3D conversion method of the present disclosure. The entire conversion process does not require any modification to the content to be converted in advance. Even a third-party application installed on the terminal does not need to be modified, and the APP image may be presented in 3D effect, avoiding the process of adapting the application to a 3D device. The present disclosure increases the number of applications supporting 3D display on a 3D device, and enables content capable of running in a virtual environment to be converted from a 2D image to a glasses-free 3D image display effect; the present disclosure has strong universality and high practical value. That is, the present disclosure adopts a general solution to implement a general 3D conversion proxy service to complete corresponding conversion and adaptation work; applications may adapt to a 3D function without modification and there is no need for third-party application adaptation development, with few promotion restrictions, and application scenarios are wider.

The implementation environment of the embodiments of the present disclosure is introduced below.

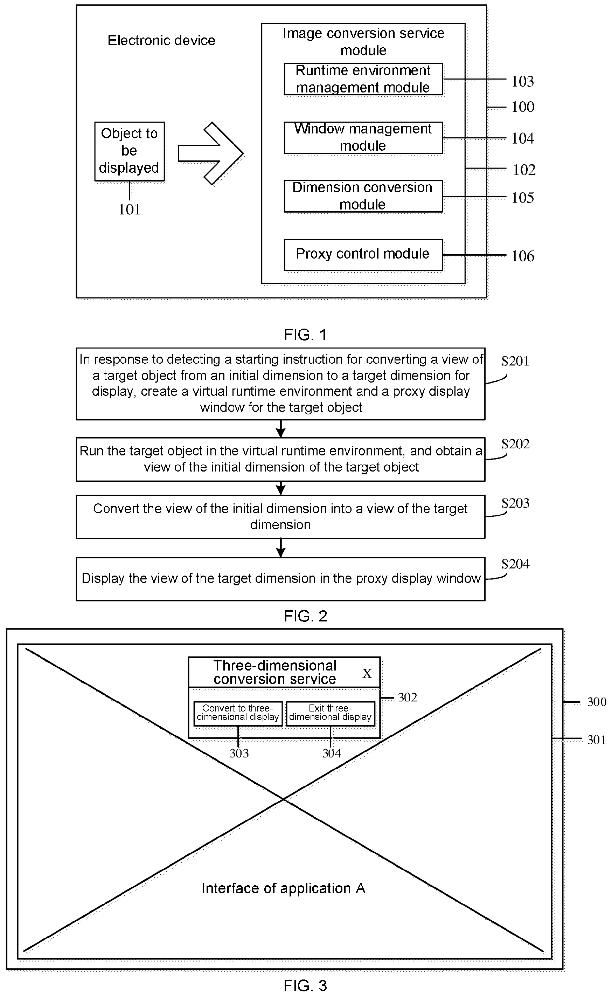

As shown in FIG. 1, FIG. 1 is an architecture diagram of a system of an electronic device according to some embodiments, and the electronic device 100 may include: an object to be displayed 101 and an image conversion service module 102.

The image conversion service module 102 includes: a runtime environment management module 103, a window management module 104, a dimension conversion module 105, and a proxy control module 106.

In the embodiments of the present disclosure, the runtime environment management module 103 is configured to manage a runtime environment of a display object, and acquire view images of the display object in different runtime environments.

The window management module 104 is configured to manage a display window of the display object in a real runtime environment of the display object.

The dimension conversion module 105 is configured to convert a view image from two-dimensional display to three-dimensional display, or convert a view image from three-dimensional display to two-dimensional display.

The proxy control module 106 is configured to convert operation instructions of different runtime environments.

As an implementation, the electronic device 100 may, in response to a 3D display instruction for the object to be displayed 101 input by a user, isolate, for the object to be displayed 101, a virtual runtime environment for simulating the running of the object to be displayed 101 outside the real runtime environment of the object to be displayed 101 through the runtime environment management module 103 in the image conversion service module 102, and create a proxy display window for displaying the view image of the object to be displayed in place in the real runtime environment of the object to be displayed 101 through the window management module 104 in the image conversion service module 102. Then, the electronic device 100 may migrate the object to be displayed 101 from the real runtime environment to the virtual runtime environment through the runtime environment management module 103, and acquire a two-dimensional view image when the object to be displayed 101 runs in the virtual runtime environment. Thereafter, the electronic device 100 may convert the two-dimensional view image into a three-dimensional view image through the dimension conversion module 105 in the image conversion service module 102, and display the three-dimensional view image through the proxy display window created by the window management module 104.

In some embodiments, after displaying the three-dimensional view image in the proxy display window, the electronic device 100 may receive, through the window management module 104, an initial operation instruction input by a user on the three-dimensional view image in the proxy display window and used to instruct the object to be displayed 101 to execute a target event in the real runtime environment. Then, the electronic device 100 may convert the above initial operation instruction into a target operation instruction for instructing the object to be displayed 101 to execute the target event in the virtual runtime environment through the proxy control module 106 in the image conversion service module 102, and send the target operation instruction to the object to be displayed 101 in the virtual runtime environment. Thereafter, the electronic device 100 may acquire a target view image obtained by the object to be displayed 101 by executing the target event, and synchronize the target view image to the proxy display window for display.

It should be noted that, the embodiments of the present disclosure do not limit the object to be displayed 101. For example, the object to be displayed 101 may be an APP. For another example, the object to be displayed 101 may be a desktop icon. For yet another example, the object to be displayed 101 may be video content, game content, etc. on an APP.

In the embodiments of the present disclosure, the electronic device 100 may be a terminal device supporting glasses-free 3D display, and the display screen of the electronic device includes a flat screen, a curved screen or a flexible display screen.

The terminal may be a device with a transceiving function, such as a mobile phone, a tablet computer, a desktop computer, a laptop computer, a handheld computer, a notebook computer, an ultra-mobile personal computer (UMPC), a netbook, etc., and the embodiments of the present disclosure do not specifically limit the form of the terminal. The terminal may perform human-machine interaction with a user through one or more of a keyboard, a touchpad, a touch screen, a remote controller, voice interaction, a handwriting device or other manners.

After introducing the application scenario and implementation environment of the embodiments of the present disclosure, the view image display method provided by the embodiments of the present disclosure is described in detail below in combination with the above implementation environment.

The embodiments of the present disclosure provide a view image display method. As shown in FIG. 2, the view image display method includes: S201 to S204.

In S201, in response to detecting a starting instruction for converting a view image of a target object from an initial dimension to a target dimension for display, a virtual runtime environment and a proxy display window are created for the target object.

The virtual runtime environment is a virtual runtime environment for running the target object, isolated from a real runtime environment of the target object.

It should be noted that, a virtual runtime environment is an independent operating system environment created through software simulation on computer hardware. In such an environment, a user may install and run systems, applications and services different from those of a host operating system.

For example, common virtual runtime environment technologies include: VMware, VirtualBox, Hyper-V, a kernel-based virtual machine (Kernel-based Virtual Machine, KVM) and Docker containers, etc.

A real runtime environment refers to an environment in which software or a program is directly executed on an actual hardware device, without involving any virtualization technology. Under such an environment, an operating system, application programs and all related system resources directly interact with physical hardware.

Exemplarily, installing and running a Windows or Linux operating system directly on a computer without any virtual machine software installed, the operating system runs in a real runtime environment. Application programs in such an environment may directly access and use all CPUs, memories, hard disks and other hardware resources, and performance is not affected by additional overhead of a virtualization layer.

As an implementation, a display apparatus is deployed with an image conversion service module, and the image conversion service module may include: a runtime environment management module. In a process of creating a virtual runtime environment for the target object by the display apparatus, the display apparatus may create a virtual runtime environment for the target object through the runtime environment management module.

For the process of creating the virtual runtime environment for the target object by the display apparatus in the embodiments of the present disclosure, reference may be made to descriptions of creating the virtual runtime environment through software simulation in some technologies, which will not be repeated in the embodiments of the present disclosure.

In the embodiments of the present disclosure, the proxy display window is used to display a view image of the target object in place of a display window of the target object in the real runtime environment of the target object, and the display window of the target object displays the view image of the target object in the virtual runtime environment.

That is, the proxy display window may replace an original display window of the target object, receive and display the view image of the target object, thereby performing image displaying in the real runtime environment, while the original display window of the target object receives and displays the view image of the target object in the virtual runtime environment.

In some embodiments, the proxy display window may display the view image of the target object in place of the display window of the target object by intercepting the view image of the target object, and the display window of the target object does not display the view image of the target object.

As an implementation, the image conversion service module may further include: a window management module. In a process of creating a proxy display window for the target object by the display apparatus, the display apparatus may create the proxy display window for the target object through the window management module.

It should be noted that, a display window in computer graphics and user interface design generally refers to a specific area used by an application program or an operating system to present an image, text or other visual content. It is a rectangular area, which may be the whole screen or a part of the screen, and is used to receive and display data output from the application program.

For the process of creating the proxy display window for the target object by the display apparatus in the embodiments of the present disclosure, reference may be made to descriptions of creating the display window in some technologies, which will not be repeated in the embodiments of the present disclosure.

It should be noted that, the embodiments of the present disclosure do not limit the target object. For example, the target object may be an APP. For another example, the target object may be a desktop icon. For yet another example, the target object may be video content, game content, etc. on the APP.

It should be noted that, in the embodiments of the present disclosure, the initial dimension may be higher than the target dimension, or the initial dimension may be lower than the target dimension.

Exemplarily, the initial dimension is two-dimensional, and the target dimension is three-dimensional. Alternatively, the initial dimension is three-dimensional, and the target dimension is two-dimensional.

That is, the embodiments of the present disclosure may not only display the original view image in a reduced dimension, but also display the original view image in an elevated dimension, thus expanding the application scenarios for view image display.

In the embodiments of the present disclosure, the starting instruction may be triggered by a user operating a function switch of a system setting or a user interface switch.

As an implementation, in a case where the target object runs in the real runtime environment, the display apparatus may receive a switch operation input by a user to the image conversion service module in a system setting function (or a user interface), to trigger generation of the starting instruction.

It should be noted that, the embodiments of the present disclosure do not limit a display method of the view conversion service module. For example, the view conversion service module may be displayed in a manner of a floating window or a floating ball. For another example, the view conversion service module may be displayed in a manner of a pull-down panel. For yet another example, the view conversion service module may be displayed through a setting option.

Exemplarily, as shown in FIG. 3, a display apparatus 300 displays an interface of the application A (i.e., a view image of a target object) through a display window 301 of an application A, and a display floating window 302 of a view conversion service is displayed on the display window 301. The display floating window 302 includes: a button 303 for switching to three-dimensional display and a button 304 for exiting three-dimensional display. The display apparatus 300 may, in response to a click operation of the user on the button 303 for switching to three-dimensional display, generate a conversion instruction for converting the interface of the application A from two-dimensional display to three-dimensional display, and then detect the conversion instruction for the application A.

As another implementation, the display apparatus may receive a switch operation input by the user on the view conversion service module when the target object is not running in the real runtime environment, and then detect a conversion instruction for the target object.

Exemplarily, in combination with FIG. 3, when the display apparatus is started, the display floating window 302 as shown in FIG. 3 may be displayed.

That is, the display apparatus may perform dimension conversion on a view image of an object to be displayed when the object to be displayed is in different running states, thereby improving operability of view image display.

In some embodiments, the starting instruction may be triggered by a system (i.e., the display apparatus) detecting that a preset condition is satisfied.

It should be noted that, the embodiments of the present disclosure do not limit the preset condition. For example, the preset condition may be whether the object to be displayed is authorized for dimension conversion. For another example, the preset condition may be whether idle computing power resources in the system satisfy performing dimension conversion on the object to be displayed. For yet another example, the preset condition may be whether the object to be displayed has a historical record of dimension conversion.

That is, the display apparatus may trigger the starting instruction in a manner of manual participation or automation, and in this way, the operability of view image display may be improved.

In S202, the target object is run in the virtual runtime environment, and a view image of the target object in an initial dimension is acquired.

In the embodiments of the present disclosure, the display apparatus may run the target object in the virtual runtime environment through the runtime environment management module.

It should be noted that, before running the target object in the virtual runtime environment, the display apparatus may perform a corresponding management policy on the target object according to a running state of the target object.

As an implementation, when the target object is in a running state in the real runtime environment, the display apparatus may switch the target object running in the real runtime environment to the virtual runtime environment, and further run the target object in the virtual runtime environment.

In some embodiments, the display apparatus switches a running container to which the target object belongs from the real runtime environment to the virtual runtime environment by modifying a running configuration parameter of the target object.

That is, switching the target object (e.g., an application process) to the virtual runtime environment refers to changing the running container to which the target object belongs, and switching the target object from an original runtime environment (i.e., the real runtime environment) to the running container corresponding to the virtual runtime environment.

As another implementation, in a case where the target object is not in the running state in the real runtime environment, the display apparatus may start the target object in the virtual runtime environment, and further run the target object in the virtual runtime environment.

In the embodiments of the present disclosure, the display apparatus may acquire the view image in the initial dimension displayed by the display window of the target object in the virtual runtime environment through the runtime environment management module.

As an implementation, the display apparatus may set a view capture container of the virtual runtime environment in the runtime environment management module, and the view capture container is used to acquire the view image of the target object in the initial dimension. Then, the display apparatus may acquire the view image of the target object running in the virtual runtime environment in the initial dimension through the view capture container in the environment management module.

In S203, the view image in the initial dimension is converted into a view image in the target dimension.

As an implementation, the image conversion service module may further include: a dimension conversion module. The display apparatus may convert the view image in the initial dimension into the view image in the target dimension through the dimension conversion module.

It should be noted that, for the process of converting the view image in the initial dimension into the view image in the target dimension by the display apparatus in the embodiments of the present disclosure, reference may be made to descriptions of performing dimension conversion on an image in some technologies, which will not be repeated in the embodiments of the present disclosure.

In S204, the view image in the target dimension is displayed in the proxy display window.

As an implementation, the display apparatus may acquire the view image in the target dimension output by the dimension conversion module through the window management module, and display the view image in the target dimension in the proxy display window through the window management module.

It may be understood that, by isolating the object to be displayed in the virtual runtime environment, the view image of the object to be displayed in the virtual runtime environment is acquired. Then, the view image is converted into a 3D display effect, and the converted view image is displayed through a preset proxy display window, so that the 3D device may directly present the view image with the 3D display effect. In this way, it is possible to avoid modifying and adapting the display process of the display object, thereby improving the compatibility of the display object for 3D display on the 3D device.

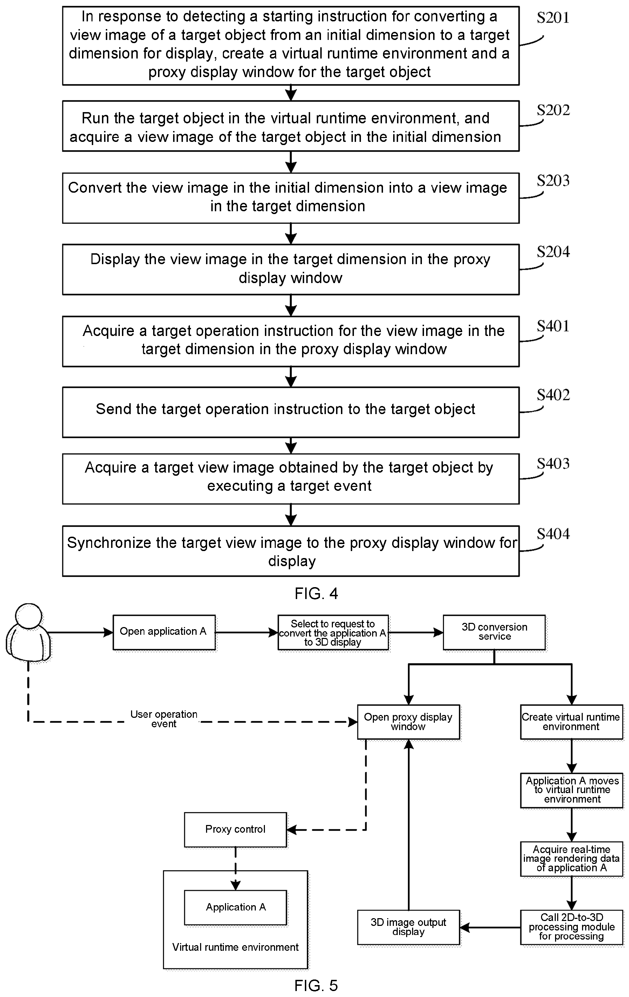

In some embodiments, as shown in FIG. 4, after S204, the view image display method may further include: S401 to S404.

In S401, a target operation instruction for the view image in the target dimension in the proxy display window is acquired.

The target operation instruction is used to instruct the target object to execute a target event.

Exemplarily, in a case where the target object is a video playback APP, the target operation instruction may be an operation instruction for instructing the video playback APP to pause playback (i.e., the target event), or the target operation instruction may be an operation instruction for instructing the video playback APP to fast forward playback, or the target operation instruction may be an operation instruction for instructing the video playback APP to jump to 3 minutes 12 seconds for playback.

As an implementation, the display apparatus may acquire, through the window management module, the target operation instruction input by the user for the view image in the target dimension in the proxy display window.

As an implementation, the display apparatus stores a preset correspondence between a plurality of first preset operation instructions in the real runtime environment and a plurality of second preset operation instructions in the virtual runtime environment. The display apparatus may acquire an initial operation instruction of the user for the view image in the target dimension, and the initial operation instruction is an operation instruction for the target object in the real runtime environment. Then, the display apparatus may convert the initial operation instruction into an operation instruction for the target object in the virtual runtime environment according to the preset correspondence, to acquire the target operation instruction.

It should be noted that, an event instructed to be executed by the first preset operation instruction is the same as an event instructed to be executed by a corresponding second preset operation instruction, and there is a difference in format between the first preset operation instruction and the corresponding second preset operation instruction.

Exemplarily, the preset correspondence in the display apparatus may include: a correspondence A between an operation instruction A1 (i.e., the first preset operation instruction) and an operation instruction A2 (i.e., the second preset operation instruction), a correspondence B between an operation instruction B1 and an operation instruction B2, and a correspondence C between an operation instruction C1 and an operation instruction C2, and both the operation instruction A1 and the operation instruction A2 indicate an event A, both the operation instruction B1 and the operation instruction B2 indicate an event B, both the operation instruction C1 and the operation instruction C2 indicate an event C, the operation instruction A1, the operation instruction B1 and the operation instruction C1 are all instructions in a format A, and the operation instruction A2, the operation instruction B2 and the operation instruction C2 are all instructions in a format B. In a case where the initial operation instruction of the user for the three-dimensional view image is the operation instruction B1, the display apparatus may determine, according to the correspondence B, that the target operation instruction is the operation instruction B2.

As an implementation, the view conversion service module may further include: a proxy control module. In a process of converting the initial operation instruction into the target operation instruction by the display apparatus, the display apparatus may convert the initial operation instruction into the target operation instruction through the proxy control module.

In S402, the target operation instruction is sent to the target object.

As an implementation, the display apparatus may send the target operation instruction to the target object running in the virtual runtime environment.

In some embodiments, in a process of sending the target operation instruction to the target object by the display apparatus, the display apparatus may send the target operation instruction to the target object through the proxy control module.

In S403, a target view image obtained by the target object by executing the target event is acquired.

As an implementation, the display apparatus may respond to the target operation event through the target object, execute the target event, display the target view image in the virtual runtime environment through the display window of the target object, and acquire the target view image through the environment management module simultaneously.

In S404, the target view image is synchronized to the proxy display window for display.

In the embodiments of the present disclosure, a display dimension of the target view image is the initial dimension. In a process of synchronizing the target view image to the proxy display window for display by the display apparatus, the display apparatus may convert the target view image from the initial dimension to the target dimension, obtain a converted target view image, and display the converted target view image in the proxy display window.

In some embodiments, in a process of performing dimension conversion on the target view image by the display apparatus, the display apparatus may perform dimension conversion on the target view image through the dimension conversion module, to obtain the converted target view image.

Similarly, in a process of displaying the converted target view image in the proxy display window by the display apparatus, the display apparatus may acquire the converted target view image output by the dimension conversion module through the window management module, and display the converted target view image in the proxy display window through the window management module.

It may be understood that, after receiving the operation instruction of the user for the converted view image, the operation instruction is converted into an instruction matched under the virtual runtime environment, to obtain a converted operation instruction, and the converted operation instruction is injected into an object to be displayed under the virtual runtime environment. Then, a new view image of the object to be displayed in response to the converted operation instruction under the virtual runtime environment is acquired, and the new view image is synchronized to the preset display window. In this way, while implementing the 3D display effect of the display object, the functions of the display object may also be ensured to be normally executed.

In some embodiments, after the display apparatus creates the virtual runtime environment and the proxy display window for the target object in response to detecting the conversion instruction (i.e., S201), the display apparatus may also delete the virtual runtime environment and close the proxy display window in response to detecting an exit instruction for instructing to stop converting the view image of the target object from the initial dimension to the target dimension for display.

Exemplarily, in combination with the display interface shown in FIG. 3 above, the display apparatus may generate an exit instruction for stopping converting the interface of the application A from two-dimensional display to three-dimensional display in response to a click operation of the user on the button 304 for exiting three-dimensional display, and then detect the exit instruction for the Application A.

It may be understood that, in response to dimension conversion management on the view image of the target object, the display apparatus may specifically construct the virtual runtime environment and the proxy display window for the target object, and delete the virtual runtime environment and the proxy display window corresponding to the target object after the conversion is completed. In this way, for each display object that requires dimension conversion, the display apparatus is required to create an adapted virtual runtime environment and proxy display window for each display object that requires dimension conversion, and clear the virtual runtime environment and proxy display window used by a historical display object after the conversion is completed, to avoid causing adaptation problems for subsequent objects that require dimension conversion, thereby improving the compatibility of the display objects for 3D display on 3D devices.

In some embodiments, the display apparatus, after deleting the virtual runtime environment and closing the proxy display window, may save a record of performing dimension conversion on the view image of the target object in a preset log.

In this way, by monitoring the dimension conversion process of the view image, historical objects participating in the dimension conversion may be recorded, thereby providing valuable reference for subsequent management of the historical objects.

The view image display method provided by the embodiments of the present disclosure is introduced below with reference to examples. The display apparatus triggers a request for converting target display content to perform 3D display according to a user operation instruction or according to the system detecting that a preset condition is satisfied, and moves the target display content to a virtual runtime environment of a 3D conversion service to run according to the request. The virtual runtime environment, after receiving the application running image output data, invokes a 2D-to-3D conversion module to convert the application image into a 3D display image. Meanwhile, the 3D conversion service opens a view display window to synchronously display the display content after the 3D conversion.

Thereafter, the display apparatus may intercept a user operation event in real time in the 3D image display window, and then the 3D conversion service proxy transfers the user operation to the application A running in the virtual environment, thereby completing the user operation control. Thus, the conversion of the application A from 2D to 3D display is completed, and in this case, the display and control of the application A are completely implemented by the 3D conversion service proxy, and the conversion from 2D to 3D display may be completed without any modification to the application.

In the embodiments of the present disclosure, as shown in FIG. 5, FIG. 5 shows a procedure of conversion to 3D display by an application, and includes that:
a user opens an application A that is required to be converted, and selects to request to convert the application A to 3D display. For example, the 3D conversion service is triggered by the user through a system switch, a floating window switch, or when the 3D display device detects that a certain condition is satisfied.

Then, the 3D conversion service in the 3D display device moves the application A to the virtual environment to run. For example, the 3D display device creates a virtual runtime environment through the 3D conversion service, and sets an image acquisition container of the virtual runtime environment, for acquiring display image data of the application A. Thereafter, the 3D display device moves the application A to the virtual environment to run (the container to which an application process belongs during running is switched to the virtual environment), and initializes a 3D image display window for subsequently displaying the converted 3D display image.

Thereafter, the 3D display device acquires real-time image rendering data of the application A. For example, after the application A runs in the virtual runtime environment, the 3D display device acquires the display image data of the application A in real time through the set data capture container, and transmits the acquired real-time image data to the 2D-to-3D processing module.

Thereafter, the 3D display device invokes the 2D-to-3D module for processing, and converts the real-time 2D image data into 3D image data. For example, the 3D display device provides an input buffer and an output buffer externally through the 2D-to-3D module for data input/output. After the 3D display device acquires the application image data to be converted, the data is transmitted to the input buffer and the 2D-to-3D module performs the 3D conversion. The 2D-to-3D module may be integrated in the 3D conversion service, or may be pre-installed in an operating system of the display device.

Thereafter, the 3D display device displays the 3D image data on the screen. For example, the 3D display device outputs and renders the data converted in step 5 to the display window created in step 3, to complete 3D image output and display.

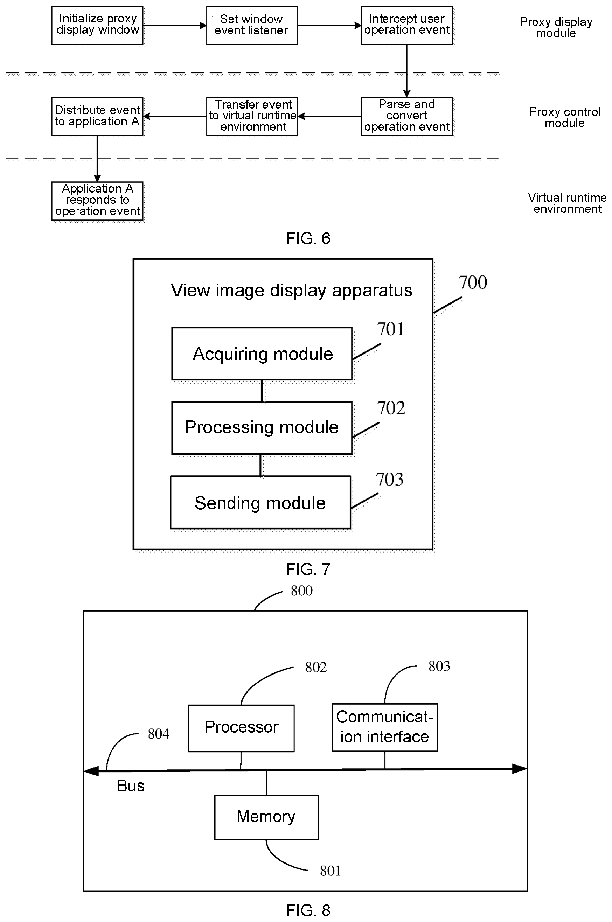

In some embodiments, as shown in FIG. 6, the 3D display device may initialize a proxy display window, set a window event listener, and then intercept a user operation event through the proxy display window, to receive an operation event input by a user. Then, the 3D display device may parse and convert the operation event through the proxy control module, and transfer the parsed and converted operation event to the virtual runtime environment (i.e., inject the event into the virtual runtime environment). Thereafter, the 3D display device distributes the event to the application A, and responds to the operation time through the application A, to complete proxy application control.

For example, after the proxy display window is initialized, the 3D display device sets a window event listener for listening to a user operation event. Then, when the user touches or clicks the display window, the 3D display device intercepts the user operation event through the event listener, converts the intercepted operation event into an event matched with the virtual runtime environment, encapsulates and forwards the event to the virtual runtime environment again. Thereafter, the 3D display device receives the externally injected event through the virtual runtime environment, distributes the operation event to the application A, and makes a response through the application A according to its own logic to the received operation event, thereby completing proxy control of the application A in the virtual runtime environment.

Exemplarily, taking an example in which a 3D display device is an Android platform pad, a user opens a video on the pad. The 3D display device triggers a request to convert the video for 3D display. The user triggers a 3D conversion request via the floating window switch, which is sent to the 3D conversion service of the 3D display device.

The 3D display device moves the video to the virtual environment to run through the 3D conversion service. The 3D display device receives the request through the 3D conversion service, creates a virtual screen as a virtual runtime environment; the 3D display device sets a display Surface of the virtual screen as an image acquisition container, for acquiring display image data of the application; the 3D display device moves a video task stack onto the virtual screen to run through moveTask based on the 3D conversion service; the 3D display device initializes a 3D image display window 3DSurfaceView for subsequently displaying the converted 3D display image.

Then, the 3D display device acquires real-time image rendering data of the application. After the video runs in the virtual runtime environment, the 3D display device acquires the video display image data in real time through the set Surface; the 3D display device transmits the acquired real-time image data to the 2D-to-3D processing module.

Thereafter, the 3D display device invokes the 2D-to-3D module, and converts the real-time 2D image data into 3D image data. The 3D display device provides inputSurface and outputSurface externally through the 2D-to-3D module for data input/output. After the virtual runtime environment acquires the image data to be converted, the image data is transmitted to inputSurface and the 2D-to-3D module completes 3D conversion. The 3D display device displays the 3D image data on the screen.

Finally, the 3D display device outputs and renders the data after the conversion to the created 3DSurfaceView, to complete 3D image display.

In addition, the 3D display device receives a user input event through the proxy display window, transfers the event to the virtual runtime environment through the proxy control module, and completes proxy application control. After completing initialization of the proxy display window 3DSurfaceView, the 3D display device sets a touch event listener; when the user clicks a video pause control button on the display window, the 3D display device receives an onTouch callback event through the listener; the 3D display device re-encapsulates the intercepted operation event, associates it with the virtual screen and then injects it into the virtual screen; the 3D display device receives the externally injected touch event through the virtual screen, and distributes the touch event to a video controller; the 3D display device triggers a click event after receiving the touch event through the video controller and then pauses video playback, thereby completing operation response.

In some embodiments, taking an example in which the application A is a game, the 3D display device enters a 3D display state by the user actively initiating a conversion request or automatically invoking the 3D conversion service after the system detects that a preset condition is satisfied. For a game scenario, when the 3D display device detects that the user opens the game, in order to improve user experience, the 3D display device may automatically invoke the 3D conversion service to convert a 2D game image into 3D display, thereby improving the user experience. Alternatively, the 3D conversion service may be automatically invoked when the 3D display device starts up, and 3D conversion is always performed on an application at the topmost layer displayed on the screen, so as to implement displaying all interfaces of the entire system in a 3D effect.

It can be understood that in order to achieve the functions mentioned above, a view image display apparatus contains corresponding hardware structures and/or software modules for performing respective functions. Those skilled in the art should easily realize that the present disclosure can be implemented in the form of hardware or a combination of hardware and computer software, in combination with the algorithm steps of various examples described in the embodiments of the present disclosure. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the present disclosure.

In the embodiments of the present disclosure, the view image display apparatus may be divided into functional modules according to the above-mentioned method embodiments, and for example, each functional module may be divided corresponding to each function, or two or more functions may be integrated into one functional module. The above integrated module is implemented in the form of hardware or in the form of software. It should be noted that the division of modules in the embodiments of the present disclosure is illustrative, and is merely a kind of logical functional division, and there may be other division methods in actual implementations. The example in which each functional module is divided corresponding to each function, is taken for explanation below.

In some embodiments, with reference to the architecture diagram of the system of the electronic device shown in FIG. 1, the view image display apparatus may include: a runtime environment management module 103, a window management module 104, and a dimension conversion module 105.

In response to detecting a starting instruction for converting a view image of a target object from an initial dimension to a target dimension for display, a virtual runtime environment is created for the target object through the runtime environment management module 103, and a proxy display window is created for the target object through the window management module 104. The virtual runtime environment is a virtual runtime environment for running the target object, isolated from a real runtime environment of the target object. The proxy display window is used to display the target object in the real runtime environment of the target object in place of a display window of the target object. The target object is run in the virtual runtime environment through the runtime environment management module 103, and a view image of the target object in the initial dimension is acquired. The view image in the initial dimension is converted into a view image in the target dimension through the dimension conversion module 105. The view image in the target dimension is displayed in the proxy display window through the window management module 104.

In some embodiments, the display apparatus may further include: a proxy control module 106. After displaying the view image in the target dimension in the proxy display window through the window management module 104, a target operation instruction for the view image in the target dimension in the proxy display window is acquired through the window management module 104, and the target operation instruction is used to instruct the target object to execute a target event. The target operation instruction is sent to the target object through the proxy control module 106, and a target view image obtained by the target object by executing the target event is acquired. The target view image is synchronized to the proxy display window through the window management module 104 for display.

Introduction is made below to the functional modules in the above view image display apparatus by taking the display object 101 being an application A as an example, with reference to examples.

The runtime environment management module 103 may be configured to simulate an application runtime environment; when a user initiates a 3D conversion request for the application A, a virtual runtime environment is created, and the application A is moved to the virtual environment to run (moving to the virtual environment refers to changing the running container to which an application process belongs, and switching the application process from the original runtime environment to a virtual running container). Meanwhile, the runtime environment management module 103 acquires real-time image data of the application A running and outputs it externally.

The dimension conversion module 105: may be configured to implement conversion from 2D image to 3D image for display. Real-time 2D image data of the application A acquired by the runtime environment management module 103 is received, and the 2D image data is converted into 3D image data for output.

The window management module 104: may be configured to output and display a 3D conversion result. 3D image data output by the dimension conversion module 105 is received and the 3D image data is output to the proxy display window in real time.

The proxy control module 106: may be configured to receive a user operation event in real time, transfer the operation event to the virtual runtime environment and distribute it to the converted application A, to implement proxy control.

In some embodiments, FIG. 7 is a structural schematic diagram of a view image display apparatus according to some embodiments, and the view image display apparatus 700 may perform the view image display method shown in FIG. 2 and FIG. 4 in the above method embodiments. As shown in FIG. 7, the view image display apparatus 700 includes: an acquiring module 701 and a processing module 702.

The processing module 702, is configured to: in response to detecting a starting instruction for converting a view image of a target object from an initial dimension to a target dimension for display, create a virtual runtime environment and a proxy display window for the target object. The virtual runtime environment is a virtual runtime environment for running the target object, isolated from a real runtime environment of the target object. The proxy display window is used to display the target object in the real runtime environment of the target object in place of a display window of the target object. The processing module 702, is further configured to run the target object in the virtual runtime environment. The acquiring module 701, is configured to acquire a view image of the target object in the initial dimension. The processing module 702, is further configured to convert the view image in the initial dimension into a view image in the target dimension. The processing module 702, is further configured to display the view image in the target dimension in the proxy display window.

In some embodiments, the processing module 702 is further configured to set an image acquisition container of the virtual runtime environment, and the image acquisition container is used to acquire a view image of the target object in the initial dimension.

In some embodiments, the starting instruction is triggered by a user operating a function switch in a system setting or a user interface switch, or the starting instruction is triggered by a system detecting that a preset condition is satisfied.

In some embodiments, the initial dimension is higher than the target dimension, or the initial dimension is lower than the target dimension.

In some embodiments, the view image display apparatus 700 further includes: a sending module 703. The acquiring module 701, is further configured to acquire a target operation instruction for the view image in the target dimension in the proxy display window, and the target operation instruction is used to instruct the target object to execute a target event. The sending module 703, is further configured to send the target operation instruction to the target object. The acquiring module 701, is further configured to acquire a target view image obtained by the target object by executing the target event. The processing module 702, is further configured to synchronize the target view image to the proxy display window for display.

In some embodiments, the acquiring module 701, is configured to acquire an initial operation instruction for the view image in the target dimension, and the initial operation instruction is an operation instruction for the target object in the real runtime environment. The processing module 702, is further configured to convert the initial operation instruction into an operation instruction for the target object in the virtual runtime environment, to acquire the target operation instruction.

In some embodiments, the processing module 702, is further configured to switch the target object running in the real runtime environment to the virtual runtime environment. The acquiring module 701, is configured to acquire a view image in the initial dimension displayed by a display window of the target object in the virtual runtime environment.

In some embodiments, the processing module 702, is configured to switch a running container to which the target object belongs from the real runtime environment to the virtual runtime environment by modifying a running configuration parameter of the target object.

In some embodiments, the processing module 702, is further configured to delete the virtual runtime environment and close the proxy display window in response to detecting an exit instruction for instructing to stop converting the view image of the target object from the initial dimension to the target dimension for display.

In some embodiments, the display dimension of the target view image is the initial dimension. The processing module 702, is configured to convert the target view image from the initial dimension to the target dimension, to obtain a converted target view image. The processing module 702, is further configured to display the converted target view image in the proxy display window.

In a case where the functions of the above integrated modules are implemented in the form of hardware, the embodiments of the present disclosure provide another network device structure of the view image display apparatus involved in the above embodiments. As shown in FIG. 8, the view image display device 800 includes: a processor 802 and a bus 804. In some embodiments, the view image display device 800 may further include a memory 801. In some embodiments, the view image display device 800 may further include a communication interface 803.

The processor 802 may implement or perform various exemplary logical blocks, modules and circuits described in conjunction with the embodiments of the present disclosure. The processor 802 may be a central processing unit, a general-purpose processor, a digital signal processor, an application specific integrated circuit, a field programmable gate array or any other programmable logic device, a transistor logic device, a hardware component, or any combination thereof. The processor 802 may implement or perform various exemplary logical blocks, modules and circuits described in conjunction with the embodiments of the present disclosure. The processor 802 may also be a combination that implements computing functions, for example, including a combination of one or more microprocessors, a combination of a digital signal processor (DSP) and a microprocessor, or the like.

The communication interface 803 is configured to connect with other devices via a communication network. The communication network may be an Ethernet, a radio access network, a wireless local area network (WLAN), or the like.

The memory 801 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 801 may exist independently of the processor 802, and the memory 801 may be connected to the processor 802 via the bus 804 and is used for storing instructions or program codes. The processor 802, when calling and executing the instructions or program codes stored in the memory 801, is capable of implementing the view image display method provided in the embodiments of the present disclosure.

As another implementation, the memory 801 may be integrated with the processor 802.

The bus 804 may be an extended industry standard architecture (EISA) bus or the like. Buses 804 may be divided into address buses, data buses, control buses, and the like. For ease of representation, only one bold line is used for the representation in FIG. 8, but it does not mean that there is only one bus or one type of the bus.

Some embodiments of the present disclosure provide a computer readable storage medium (e.g., a non-transitory computer readable storage medium), and the computer readable storage medium has stored computer program instructions therein that, upon being executed on a computer, enable the computer to perform the view image display method as described in any embodiment of the above embodiments.

Exemplarily, the above computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage media described in the present disclosure may represent one or more devices for storing information and/or other machine readable storage media for storing information. The term "machine readable storage medium" may include, but be not limited to, a radio channel and various other media capable of storing, containing, and/or carrying instructions and/or data.

Some embodiments of the present disclosure provide a computer program product including instructions, and the computer program product, upon being executed on a computer, enables the computer to perform the view image display method as described in any embodiment of the above-mentioned embodiments.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

## Claims

1. A view image display method, **characterized by** comprising:
in response to detecting a starting instruction for converting a view image of a target object from an initial dimension to a target dimension for display, creating a virtual runtime environment and a proxy display window for the target object, wherein the virtual runtime environment is a virtual runtime environment for running the target object, isolated from a real runtime environment of the target object; and the proxy display window is used to display the target object in the real runtime environment of the target object in place of a display window of the target object;
running the target object in the virtual runtime environment, and acquiring a view image of the target object in the initial dimension;
converting the view image in the initial dimension into a view image in the target dimension; and
displaying the view image in the target dimension in the proxy display window.

2. The method according to claim 1, wherein running the target object in the virtual runtime environment, and acquiring the view image of the target object in the initial dimension, comprises:
setting an image acquisition container of the virtual runtime environment, wherein the image acquisition container is used to acquire the view image of the target object in the initial dimension.

3. The method according to claim 1, wherein the starting instruction is triggered by a user operating a function switch in a system setting or a user interface switch, or the starting instruction is triggered by a system detecting that a preset condition is satisfied.

4. The method according to claim 1, wherein the initial dimension is higher than the target dimension, or the initial dimension is lower than the target dimension.

5. The method according to claim 1, wherein, after displaying the view image in the target dimension in the proxy display window, the method further comprises:
acquiring a target operation instruction for the view image in the target dimension in the proxy display window, wherein the target operation instruction is used to instruct the target object to execute a target event;
sending the target operation instruction to the target object, and acquiring a target view image obtained by the target object by executing the target event; and
synchronizing the target view image to the proxy display window for display.

6. The method according to claim 5, wherein acquiring the target operation instruction for the view image in the target dimension in the proxy display window, comprises:
acquiring an initial operation instruction for the view image in the target dimension, wherein the initial operation instruction is an operation instruction for the target object in the real runtime environment; and
converting the initial operation instruction into an operation instruction for the target object in the virtual runtime environment, to acquire the target operation instruction.

7. The method according to claim 1, wherein, before running the target object in the virtual runtime environment, the method further comprises:
switching the target object running in the real runtime environment to the virtual runtime environment;
acquiring the view image of the target object in the initial dimension, comprises:
acquiring the view image in the initial dimension displayed by a display window of the target object in the virtual runtime environment.

8. The method according to claim 7, wherein switching the target object running in the real runtime environment to the virtual runtime environment, comprises:
switching a running container to which the target object belongs from the real runtime environment to the virtual runtime environment by modifying a running configuration parameter of the target object.

9. The method according to claim 1, further comprising:
in response to detecting an exit instruction for instructing to stop converting the view image of the target object from the initial dimension to the target dimension for display, deleting the virtual runtime environment and closing the proxy display window.

10. The method according to claim 5, wherein the display dimension of the target view image is the initial dimension;
synchronizing the target view image to the proxy display window for display, comprises:
converting the target view image from the initial dimension to the target dimension, to obtain a converted target view image; and
displaying the converted target view image in the proxy display window.

11. A view image display method, **characterized in that** the method is applied to a display apparatus, and the display apparatus comprises: a runtime environment management module, a window management module, and a dimension conversion module;
in response to detecting a starting instruction for converting a view image of a target object from an initial dimension to a target dimension for display, creating a virtual runtime environment for the target object through the runtime environment management module, and creating a proxy display window for the target object through the window management module; wherein the virtual runtime environment is a virtual runtime environment for running the target object, isolated from a real runtime environment of the target object; and the proxy display window is used to display the target object in the real runtime environment of the target object in place of a display window of the target object;
running the target object in the virtual runtime environment through the runtime environment management module, and acquiring a view image of the target object in the initial dimension;
converting the view image in the initial dimension into a view image in the target dimension through the dimension conversion module; and
displaying the view image in the target dimension in the proxy display window through the window management module.

12. The method according to claim 11, wherein the display apparatus further comprises: a proxy control module;
after displaying the view image in the target dimension in the proxy display window through the window management module, the method further comprises:
acquiring, through the window management module, a target operation instruction for the view image in the target dimension in the proxy display window, wherein the target operation instruction is used to instruct the target object to execute a target event;
sending the target operation instruction to the target object through the proxy control module, and acquiring a target view image obtained by the target object by executing the target event; and
synchronizing the target view image to the proxy display window through the window management module for display.

13. An electronic device, **characterized by** comprising: a memory and a processor; the memory is coupled with the processor; the memory is configured to store instructions executable by the processor; and the processor, upon executing the instructions, performs the method according to any one of claims 1 to 12.

14. A computer readable storage medium, **characterized in that** the computer readable storage medium has stored computer instructions thereon, and the computer instructions, upon being executed on a computer, enable the computer to perform the method according to any one of claims 1 to 12.
